# EUROPÄISCHE PATENTSCHRIFT

(11) **EP 3 433 544 B1**
(45) Veröffentlichungstag und Bekanntmachung des Hinweises auf die Patenterteilung: **13.10.2021**
(21) Anmeldenummer: 17712457.5
(22) Anmeldetag: 20.03.2017
(51) Int. Cl.: F24F 3/16, F28F 25/08, F24F 6/04, F24F 3/14

(54) **EINBAUELEMENT ZUM EINBAU IN EINER VORRICHTUNG ZUR BEFEUCHTUNG, REINIGUNG UND/ODER KÜHLUNG EINES FLUIDS, INSBESONDERE GASES WIE Z.B. LUFT**
INSERT ELEMENT FOR INSERTING INTO A DEVICE FOR HUMIDIFYING, CLEANING AND/OR COOLING A FLUID, IN PARTICULAR A GAS, SUCH AS, FOR EXAMPLE, AIR
MODULE À INSÉRER DANS UN DISPOSITIF D'HUMIDIFICATION, DE PURIFICATION ET/OU DE REFROIDISSEMENT D'UN FLUIDE, EN PARTICULIER D'UN GAZ COMME L'AIR PAR EXEMPLE

(30) Priorität: 23.03.2016 DE 202016101597 U
(43) Veröffentlichungstag der Anmeldung: 30.01.2019
(73) Patentinhaber: Hewitech GmbH & Co. KG, 48607 Ochtrup (DE)
(72) Erfinder: DIRKSKÖTTER, Frank, 48607 Ochtrup (DE)
(74) Vertreter: dompatent von Kreisler Selting Werner - Partnerschaft von Patent- und Rechtsanwälten mbB
(86) Internationale Anmeldenummer: PCT/EP2017/056577
(87) Internationale Veröffentlichungsnummer: WO 2017/162597

(56) Entgegenhaltungen:
- EP-A1- 2 881 694
- WO-A1-2009/153278
- WO-A1-2015/044274
- DE-U1-202013 009 855

## Beschreibung

Die Erfindung betrifft ein Einbauelement zum Einbau in eine Vorrichtung zur Befeuchtung, Reinigung und/oder Kühlung eines Fluids, insbesondere Gases wie z.B. Luft.

Derartige Vorrichtungen sind auch als Verdunstungsbefeuchter und Stoffaustauscher bekannt (siehe z.B. WO 2009/153278 A1), die unter anderem zur Luftbefeuchtung und gleichzeitigen Luftkühlung beispielsweise in Wohn- oder Bürogebäuden, Lagerhallen, Stallungen, Gewächshäusern und anderen Räumen oder auch von technischen Anlagen, beispielsweise für die Reinigung und insbesondere Entstaubung von Zu- oder Abluft und für reaktive Gas- oder Luftreinigungen (insbesondere Entfernung von Geruchsstoffen wie beispielsweise Ammoniak aus der Stallabluft) eingesetzt werden. Die Abkühlung eines Gases mit Hilfe derartiger Vorrichtungen erfolgt nach dem Prinzip der adiabatischen Kühlung (Verdunstungskühlung).

Die bekannten Vorrichtungen der vorstehend genannten Arten weisen Einbauelemente auf, die über eine Vielzahl von Plattenelementen bzw. Materiallagen verfügen, welche zumeist gewellt sind, so dass bei dichter Anlage benachbarter Plattenelemente sich kreuzende Kanäle entstehen, durch die über eine Eingangsseite der Vorrichtung das Gas einströmt, die Vorrichtung durchströmt und an einer gegenüberliegenden Ausgangsseite wieder herausströmt. Die Eingangs- und Ausgangsseiten der Vorrichtung werden durch gegenüberliegende Ränder der einzelnen nebeneinanderliegenden Plattenelemente gebildet. Somit strömt also das Gas parallel zur Erstreckung der Plattenelemente zwischen deren betreffenden Rändern und zwischen den Plattenelementen.

Die Einbauelemente der vorstehend genannten Art werden mit Flüssigkeit, insbesondere Wasser, benetzt, so dass das zu behandelnde Gas an benetzten Flächen der Plattenelemente entlang strömt. Dabei ist es wünschenswert, dass die Benetzungsflüssigkeit eine möglichst große Oberfläche bildet und sich über einen längeren Zeitraum in der Vorrichtung bzw. an den Plattenelementen hält.

Bekannte Vorrichtungen der vorstehend genannten Arten weisen geschlossene Materiallagen bzw. Plattenelemente aus Kunststoff oder Papier auf, die miteinander verschweißt oder verklebt sind. Plattenelemente aus Papier haben den Nachteil, dass sich die mit ihnen aufgebauten, vom Gas durchströmbaren Körper nicht reinigen lassen, ohne dass man Gefahr läuft, die Papier-Plattenelemente zu zerstören. Diesbezüglich sind Plattenelemente aus Kunststoff zu bevorzugen. Beide bekannten Systeme jedoch haben ferner den Nachteil, dass es noch nicht zu einem optimalen Austausch des Gases mit der Feuchtigkeit kommt, was sich nachteilig auf die Effizienz der Gasbehandlung auswirken kann. Auch stellen diese Vorrichtungen einen vergleichsweise hohen Strömungswiderstand dar, was ebenfalls nicht wünschenswert ist.

Beispiele für die zuvor genannten Vorrichtungen sind in US-A-3,262,682, US-A-3,415,502, US-B-6,544,628, DE-A-26 32 020, DE-A-16 79 515, WO-A-2006/103028 und DE-U-20 2006 018 753 beschrieben.

Vorrichtungen der vorstehend genannten Art werden aber nicht nur für die Gaskühlung, sondern auch für die Kühlung von Flüssigkeiten wie beispielsweise Wasser eingesetzt. Ein Beispiel für eine derartige Anwendung ist ein Einbauelement für einen Kühlturm eines Kraftwerks, wobei auf die Plattenelementkörper, die im Kühlturm eingebaut sind, abzukühlende Flüssigkeit aufgesprüht wird, die dann durch einen durch den Kamin entstehenden Luftstrom abgekühlt wird.

Bisher bestehen die Einbaukörper der bekannten Vorrichtungen aus aufeinanderliegenden Plattenelementen, aus denen quaderförmige Blöcke als Plattenkörper hergestellt werden. Diese Blöcke werden dann nebeneinander bzw. übereinander gestapelt angeordnet. Bei größeren Anlagen kann dies zu Instabilitäten des Gebildes aus übereinanderstehenden Plattenelementkörpern führen.

Aus DE-U-20 2013 009 855 (EP-A-2 881 694) ist ein Einbauelement zum Einbau in eine Vorrichtung zur Befeuchtung, Reinigung und/oder Kühlung eines Fluids, insbesondere eines Gases wie z.B. Luft, bekannt, bei dem sowohl gewellte Gitterplattenelemente als auch gewellte Folienplattenelemente zu einem Einbauelement gestapelt angeordnet sind.

Das Dokument WO 2015/044274A zeigt ein Einbauelement nach dem Oberbegriff des Anspruchs 1.

Aufgabe der Erfindung ist es, ein Einbauelement zum Einbau in einer Vorrichtung zur Befeuchtung, Reinigung und/oder Kühlung eines Fluids, insbesondere eines Gases wie beispielsweise Luft zu schaffen, bei dem der Plattenelementkörper auch bei großen Dimensionen selbststabilisierend und mit großem Wirkungsgrad arbeitend ausgeführt ist.

Zur Lösung dieser Aufgabe wird mit der Erfindung ein Einbauelement zum Einbau in eine Vorrichtung zur Befeuchtung, Reinigung und/oder Kühlung eines Fluids, insbesondere eines Gases wie beispielsweise Luft mit den Merkmalen des Anspruchs 1 vorgeschlagen.

Einzelne Ausgestaltungen der Erfindung sind Gegenstand der abhängigen Patenansprüche.

Nach der Erfindung besteht der Einbaukörper pro Lage aus mehreren mit ihren Rändern nebeneinanderliegenden Gitterplattenelementen, wobei die Gitterplattenelemente benachbarter Lagen die gegenüberliegenden Ränder der Platten der Nachbarlage überdecken. Auf diese Weise entsteht ein Gitterplattenelementverbund, und zwar nicht notwendigerweise lediglich in einer Dimension (beispielsweise Breitenerstreckung der Lagen), sondern ggf. auch in zwei Dimensionen (nämlich Breiten- und Längenerstreckung der Lagen).

Nach der Erfindung umfasst der Einbaukörper neben den Gitterplattenelementen auch Folienplattenelemente, die perforiert sind. Diese Folienplattenelemente sind zwischen einigen der benachbarten Lagen von Gittermattenelementen angeordnet und erstrecken sich über ggf. pro Lage nebeneinander angeordneten Gitterplattenelementen. Sie dienen neben einer Erhöhung der Verweildauer von Flüssigkeit im Einbaukörper zusätzlich auch der Stabilisierung des Einbaukörpers. Die Perforationen sorgen dafür, dass das Wasser beim Herunterlaufen die Perforationen benetzende Filme bildet, die eine große Oberfläche darstellen, da die Wasserfilme beidseitig freiliegen.

Es ist nicht erforderlich, dass die Folienplattenelemente wechselweise mit den Lagen aus Gitterplattenelementen angeordnet sind. Dies kann aber durchaus so gewählt werden. An sich reicht es aus, nur zwischen einzelnen benachbarten Lagen aus Gitterplattenelementen die erfindungsgemäßen perforierten Folienplattenelemente anzuordnen.

Die Gitterplattenelemente des erfindungsgemäßen Einbauelements sind bezogen auf zwei benachbarte Lagen vorzugsweise versetzt zueinander angeordnet, so dass ein stabiler Verbund entsteht. Dieser Verbund wird noch dadurch verstärkt, dass die Gitterplattenelemente benachbarter Lagen miteinander durch Steck- oder Rastverbindungen oder durch Zapfen-Loch- oder Nietverbindungen mit Kalt- oder Warmverformung des den Zusammenhalt herstellenden Materials gegen Scherkräfte aneinander fixiert sind.

In vorteilhafter Weiterbildung der Erfindung ist vorgesehen, dass die Gitterplattenelemente jeweils Längs- und Querrandabschnitte aufweisen und dass benachbarte Gitterplattenelemente einer Lage jeweils mit Ihren Längsrändern und/oder mit ihren Querrändern aneinander gegenüberliegend angeordnet sind. Hierbei ist zweckmäßigerweise ferner vorgesehen, dass der Einbaukörper in Richtung der aufeinanderfolge der Lagen verlaufende Zusammenhaltestangen aufweist, die sich durch aneinanderliegende Gitterplattenelemente der Lagen erstrecken. Hierdurch entsteht eine kompakte Einheit, wobei pro Einbaukörper mehrere über den Einbaukörper verteilt angeordnete Zusammenhaltestangen vorgesehen sein können.

Die durch die gegeneinander versetzt angeordneten Platten hergestellten Einbaukörper weisen zweckmäßigerweise eine Quaderform auf. Ihre Seitenflächen werden also durch die außenliegenden Ränder der Gitterplattenelemente gebildet, während die Ober- und Unterseiten der Einbaukörper durch die Gitterplattenelemente der beiden Außenlagen gebildet sind. Die außenliegenden Ränder der Gitterplattenelemente der einzelnen Lagen können dabei miteinander fluchten, also auf jeder Außenseite des Einbaukörpers jeweils in gemeinsamen Ebenen angeordnet oder aber auch versetzt zueinander angeordnet sein und somit eine der jeweiligen Einbausituation des Einbaukörpers angepasste Form aufweisen. So ist es z.B. möglich, dass der Körper eine treppenstufenförmige Gestalt aufweist.

Wird ein derartiger Einbaukörper zur Gaskühlung nach dem Prinzip der adiabatischen Kühlung eingesetzt, so werden die Strömungseingangs- und -ausgangsseiten des Einbau- bzw. Kühlkörpers von zwei gegenüberliegenden Seitenflächen des Kühlkörpers gebildet. Die Flüssigkeit wird auf die Oberseite des Kühlkörpers gegeben (insbesondere gesprüht) und fließt durch diesen quer zur Gasströmung und unter Benetzung der perforierten Gitterplattenelemente (Gaskühlung nach Kreuzstromprinzip). Bei Einsatz des Kühlkörpers in einem Kühlturm funktioniert die Wasserkühlung nach dem Gegenstromprinzip, indem die zu kühlende Flüssigkeit wiederum von oben auf den Kühlkörper gegeben wird und das Gas von der Unterseite bis zur Oberseite des Kühlkörpers durch diesen strömt.

Insbesondere zweckmäßig ist es, wenn die Gitterplattenelemente perforiert sind. In diesem Zusammenhang bietet es sich an, als Gitterplattenelemente Gittermatten zu verwenden. Bei dieser Ausgestaltung der Erfindung ist der vom zu behandelnden Gas durchströmbare Einbaukörper, welcher mit einer Flüssigkeit, insbesondere Wasser, benetzbar ist, durch eine Vielzahl von gewellten Gitterplattenelementen aus Kunststoff mit Perforationen aufgebaut. Auf Grund dieser Perforationen kann ein Gasaustausch zwischen benachbarten Gitterplattenelementen durch diese hindurch erfolgen. Dies verbessert die Stoffaustauschrate zwischen Gas und Flüssigkeit und reduziert den Strömungswiderstand. Der erfindungsgemäß vorgeschlagene Körper ist also dreidimensional durchströmbar. Auf Grund der perforierten Gitterplattenelemente kommt es zu örtlichen Verwirbelungen des den Einbaukörper durchströmenden Gases, was den Austausch des Gases mit der Flüssigkeit verbessert.

Der erfindungsgemäße Einbaukörper dient insbesondere der adiabatischen Kühlung von Stallungen oder Gewächshäusern zuzuführender Luft, da durch die perforierten Gitterplattenelemente eine vergrößerte Menge an Flüssigkeit im Körper unter Bildung einer vergrößerten Oberfläche und über einen längeren Zeitraum gehalten werden kann. Die erfindungsgemäß unter anderem der Stabilisierung dienenden Folienplattenelemente sind perforiert und ggf. strukturiert. Sie erhöhen die Verweildauer der Flüssigkeit im Einbaukörper zur Gasbehandlung und sind somit in zweifacher Hinsicht vorteilhaft.

Wie bereits oben erwähnt, ist es besonders zweckmäßig, wenn die Gitterplattenelemente als Gittermatten ausgebildet sind, die Gitterstäbe aufweisen, zwischen denen sich die Perforationen in Form der Freiräume zwischen benachbarten Gitterstäben bilden. An den Gitterstäben hält sich die Benetzungsflüssigkeit unter Bildung einer recht großen Oberfläche, was eine vergrößerte Kontaktfläche des Gases mit der Flüssigkeit zur Folge hat.

Alternativ zu Gitterplattenelementen können Folienelemente ausgebildet sein, in denen die Perforationen beispielsweise durch Ausstanzen ausgebildet sind.

Die gewellten Gitterplattenelemente weisen benachbarte Erhebungen und Vertiefungen auf, die beispielsweise in Form von Tälern und Bergen ausgebildet sind. Die Seitenflanken zwischen einer Vertiefung und einer Erhebung weisen dabei zweckmäßigerweise die Perforationen auf. Die Erhebungen und Vertiefungen verlaufen vorzugsweise schräg zu den gegenüberliegenden, die Eingangs- und Ausgangsseiten des benetzbaren Einbaukörpers bildenden Ränder der Gitterplattenelemente. Alternativ können sie zwischen diesen Rändern auch zickzackförmig oder in anderer von einer geradlinigen Erstreckung abweichenden Weise verlaufen.

Als Kunststoffmaterial für die Gitterplattenelemente eignen sich Polyolefine und insbesondere Thermoplaste, wie beispielsweise PP oder PE. Anstelle von Kunststoffmaterial können die Gitterplattenelemente aber auch aus Papier oder Pappe bestehen.

Wie bereits oben erwähnt, lässt sich der erfindungsgemäße Einbaukörper vorzugsweise sozusagen "endlos" fertigen, indem mehrere Gitterplattenelemente übereinander und nebeneinander versetzt an einen Gitterplattenelementstapel aus ebenfalls nebeneinander und mit Versatz übereinander angeordneten Gitterplattenelementen angefügt werden. Hierdurch entsteht ein in der Höhe vorgebbarer Gitterplattenelementstapel, der durch "seitlichen" Anbau in seiner Breite bzw. Tiefe erweiterbar ist, so dass durch Schneiden dieses in der Breite bzw. der Tiefe anwachsenden Gitterplattenelementstapels einzelne Gitterplattenelementblöcke von gewünschter Länge erhältlich sind. Die zuvor beschriebene "Endlos"-Fertigung lässt sich manuell oder maschinell realisieren und ist im Detail in der bereits oben genannten Druckschrift WO 2009/153278 A1 beschrieben.

In vorteilhafter Weiterbildung der Erfindung ist vorgesehen, dass zwischen zwei benachbarten, übereinander angeordneten Gitterplattenelementen in dem der Stützfläche zugewandten unteren Bereich des Gitterplattenelementstapels sowie in dem der Stützfläche abgewandten oberen Bereich des Gitterplattenelementstapels zusätzliche Versteifungsfolienstreifen eingelegt werden; diese können im Bedarfsfalle ebenfalls perforiert sein.

Zweckmäßigerweise werden die Versteifungsfolienstreifen während des Aufbau des Gitterplattenelementstapels zwischen den beiden Gitterplattenelementen jeweils zweier Paare von versetzt übereinander angeordneten Gitterplattenelementen eingelegt.

Bei einer ersten Variante der Erfindung werden jeweils einzelne Gitterplattenelemente übereinander und versetzt nebeneinander angeordnet. Alternativ werden jeweils mehrere Gitterplattenelemente fluchtend übereinander zu Gitterplattenelementgruppen und die sich so ergebenden Gitterplattenelementgruppen übereinander und nebeneinander versetzt zur Bildung des Gitterplattenelementstapels angeordnet.

Als für die Endlos-Fertigung besonders vorteilhaft hat sich herausgestellt, wenn die Gitterplattenelemente zur Bildung eines treppenförmigen Versatzes des Gitterplattenelementstapels versetzt angeordnet werden. Alternativ dazu können die Gitterplattenelemente oder Gruppen von Gitterplattenelementen wechselweise versetzt angeordnet werden, so dass über die Höhe des Gitterplattenelementstapels betrachtet jedes zweite Gitterplattenelement oder jede zweite Gruppe von Gitterplattenelementen zueinander fluchtend angeordnet sind.

Die Erfindung wird nachfolgend anhand von Ausführungsbeispielen und unter Bezugnahme auf die Zeichnung näher erläutert. Im Einzelnen zeigen dabei:
- Fig. 1: eine perspektivische Ansicht eines aus mehreren nebeneinander angeordneten Lagen mit jeweils mehreren übereinanderstehenden Gitterplattenelemente aufgebauten Einbaukörpers,
- Fig. 2: eine Draufsicht auf einen Teilabschnitt eines perforierten Folienplattenelements, das als ebenes Element ausgebildet ist,
- Fig. 3: eine Alternative zum Folienplattenelement gemäß Fig. 2, indem das Folienplattenelement gefaltet, d. h. zickzackförmig oder wellenförmig ausgebildet ist, welche ein nicht erfindungsgemässes Beispiel darstellt.
- Fig. 4: eine Seitenansicht auf den Einbaukörper gemäß Fig. 1, jedoch zickzackförmig ausgebildeten Folienplattenelementen, welche nicht erfindungsgemäss sind, und
- Fig. 5: eine schematische Darstellung des Verlaufs von Wassertropfen entlang dem zickzackförmig strukturierten Folienplattenelement, welches nicht erfindungsgemäss ist.

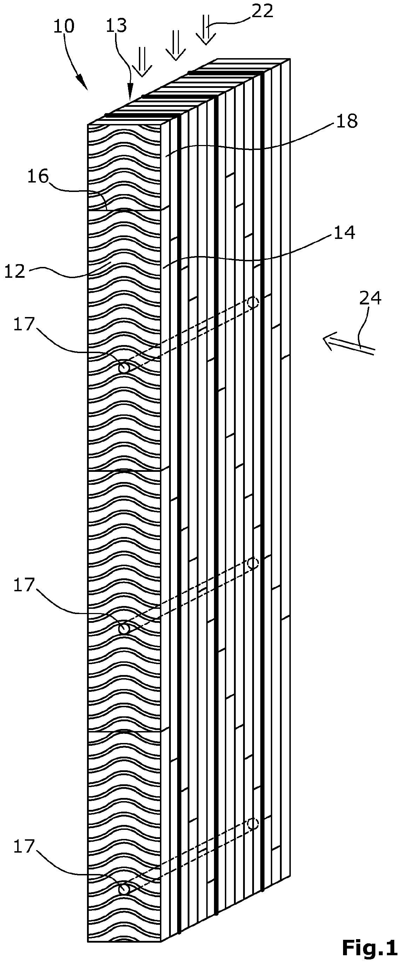

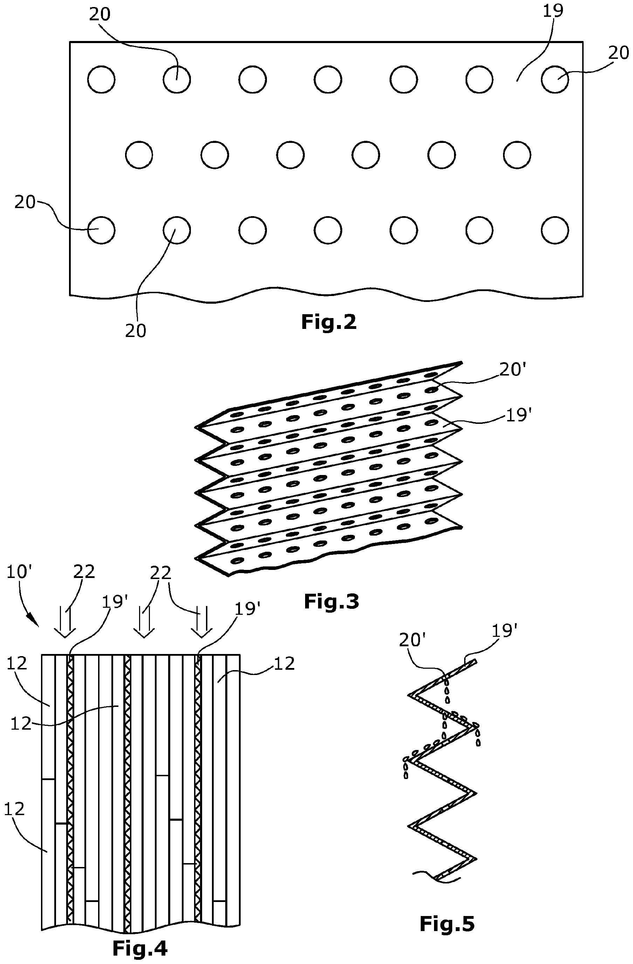

Fig. 1 zeigt einen in diesem Ausführungsbeispiel als Kühlkörper eingesetzten Einbaukörper 10 aus einzelnen gewellten Kunststoff-Gitterplattenelementen 12, die nebeneinander und übereinanderliegend sowie hochkant angeordnet sind. Der Einbaukörper 10 umfasst dabei mehrere Lagen 13 derartiger Gitterplattenelemente 12, wobei die Gitterplattenelemente 12 pro Lage 13 übereinander (auf die Ausrichtung des Einbaukörpers 10 gemäß Fig. 1 bezogen) angeordnet sind. Jedes Gitterplattenelement 12 weist zwei gegenüberliegende Längsränder 14 sowie zwei Querränder 16 auf, die aufgrund der gewellten Strukturen der Kunststoff-Gitterplattenelemente 12 ebenfalls wellenförmig verlaufen. Werden nun zwei derartige Gitterplattenelemente 12 in benachbarten Lagen 13 des Einbaukörpers 10 gegeneinander gelegt, so dass sich ihre Wellungen kreuzen, so entstehen Öffnungen 18 (in Fig. nicht detailliert gezeigt), an die sich den Einbaukörper 10 durchziehende Kanäle anschließen, wie es an sich bekannt ist. Zwischen einigen benachbarten Lagen 13 aus Gitterplattenelementen 12 sind Folienplattenelemente 19 angeordnet, die perforiert sind. Die Perforationen 20 sind in Fig. 2 gezeigt.

Fig. 3 zeigt eine nicht erfindungsgemässe, alternative Ausgestaltung der Folienplattenelemente 19', indem diese gefaltet bzw. zickzackförmig ausgebildet sind. Die Faltung kann quer zur Längserstreckung oder auch in einem anderen Winkel als 90° zur Längserstreckung des Folienplattenelements 19' ausgebildet sein. Die Perforationen 20' sind in den Flankenbereichen ausgebildet.

Fig. 4 zeigt eine Seitenansicht auf einen Einbaukörper als Kühlkörper 10' mit nicht erfindungsgemäss strukturierten, perforierten Gitterfolienelementen 19.

Fig. 5 zeigt schematisch wie die zickzackförmigen nicht erfindungsgemässen Folienplattenelemente 19' der Wasserverteilung dienen. Dabei ist anzumerken, dass die Flüssigkeitsversorgung in Richtung der Pfeile 22 der Fign. 1 und 4 auf die Oberseite des stehenden Kühlkörpers 10 bzw. 10' gelangt, während das zu behandelnde Gas den Kühlkörper 10 bzw. 10' in Richtung des Pfeils 24 durchströmt.

### BEZUGSZEICHENLISTE

- 10: Einbaukörper, Kühlkörper
- 10': Kühlkörper
- 11: Oberseite
- 12: Kunststoff-Gitterplattenelemente, Gitterplattenelement
- 13: Lage, Außenlagen
- 14: Längsränder
- 15: Unterseite
- 16: Querränder
- 17: Zusammenhaltestangen
- 18: Öffnungen
- 19: Folienplattenelement, Gitterfolienelementen
- 19': Folienplattenelemente, nicht erfindungsgemäss
- 20: Perforationen
- 20': Perforationen
- 22: Pfeile
- 24: Pfeils
- 32: Erhebungen
- 34: Vertiefungen

## Patentansprüche

1. Einbauelement zum Einbau in eine Vorrichtung zur Befeuchtung, Reinigung und/oder Kühlung eines Fluids, insbesondere Gases wie z.B. Luft mit
- einem mit Flüssigkeit, insbesondere Wasser, benetzbaren Einbaukörper (10), dessen Außenseite eine Strömungseingangsseite sowie eine Strömungsausgangsseite aufweist und zwischen diesen Seiten mit Bereichen versehen ist, welche von der Flüssigkeit benetzbar und einem Gas, insbesondere Luft, aussetzbar sind, von dem der Einbaukörper (10) und dessen Bereiche zwischen der Strömungseingangsseite und der Strömungsausgangsseite durchströmbar ist,
- wobei der Einbaukörper (10) mehrlagig ausgebildet ist und eine Vielzahl von aneinanderliegenden, jeweils von einem Rand (14,16) begrenzten, gewellten Gitterplattenelementen (12) aufweist, die mit Erhebungen und Vertiefungen versehen sind, und
- wobei zwischen mindestens zwei benachbarten Gitterplattenelementen (12) mindestens ein perforiertes Folienplattenelement (19) angeordnet ist,
- wobei der Einbaukörper (10) pro Lage mehrere mit ihren einander zugewandten Rändern aneinanderliegende Gitterplattenelemente (12) aufweist und
- wobei mindestens ein Folienplattenelement (19) zwischen den Gitterplattenelementen (12) mindestens eines Paars benachbarter Lagen von Gitterplattenelementen (12) angeordnet ist und diese Gitterplattenelemente (12) überdeckt,
**dadurch gekennzeichnet,**
- **dass** das mindestens eine Folienplattenelement (19) eben ist.

2. Einbauelement nach Anspruch 1, **dadurch gekennzeichnet, dass** zwischen mehreren Paaren aus benachbarten Gitterplattenelementen (12) jeweils ein Folienplattenelement (19) angeordnet ist.

3. Einbauelement nach Anspruch 1 oder 2, **dadurch gekennzeichnet, dass** die einander zugewandten Ränder (14,16) jeweils zweier nebeneinanderliegende Gitterplattenelemente (12) einer Lage (13) von einem Gitterplattenelement (12) der benachbarten Lage (13) des Einbaukörpers (10) überdeckt sind.

4. Einbauelement nach einem der Ansprüche 1 bis 3, **dadurch gekennzeichnet, dass** die Gitterplattenelemente (12) jeweils Längs- und Querränder (14, 16) aufweisen und dass benachbarte Gitterplattenelemente (12) einer Lage (13) jeweils mit ihren Längsrändern (14) und/oder mit ihren Querrändern (16) einander zugewandt angeordnet sind.

5. Einbauelement nach einem der Ansprüche 1 bis 4, **dadurch gekennzeichnet, dass** der Einbaukörper (10) in Richtung der Aufeinanderfolge der Lagen (13) von Gitterplattenelementen (12) verlaufende Zusammenhaltestangen (17) aufweist, die sich durch aneinanderliegende Gitterplattenelemente (12) und das mindestens eine Folienplattenelement (19) hindurch erstrecken.

6. Einbauelement nach einem der Ansprüche 1 bis 5, **dadurch gekennzeichnet, dass** die Außenseite des Einbaukörpers (10) durch die Ränder (14, 16) der Gitterplattenelemente (12) gebildete durchgehende Seitenflächen sowie durch die Gitterplattenelemente (12) der Außenlagen (13) gebildete Ober- und Unterseiten aufweist.

7. Einbauelement nach Anspruch 6, **dadurch gekennzeichnet, dass** die Strömungseingangs- und Ausgangsseiten von zwei gegenüberliegenden Außenseitenflächen des Einbaukörpers (10) gebildet sind und damit die Richtung der den Einbaukörper (10) durchziehenden Gasströmung definiert ist und dass der Einbaukörper (10) von seiner Oberseite (11) aus mit Flüssigkeit besprühbar ist, die den Einbaukörper (10) quer zur Gasströmung und unter Benetzung der Gitterplattenelemente (12) durchzieht.

8. Einbauelement nach Anspruch 7, **dadurch gekennzeichnet, dass** die Strömungseingangsseite von der Unterseite (15) des Einbaukörpers (10) und die Strömungsausgangsseite von der Oberseite (11) des Einbaukörpers (10) gebildet ist und dass der Einbaukörper (10) von seiner Oberseite (11) aus mit Flüssigkeit besprühbar ist, die den Einbaukörper (10) entgegengesetzt zur Gasströmung und unter Benetzung der Gitterplattenelemente (12) durchzieht.

9. Einbauelement nach einem der Ansprüche 1 bis 8, **dadurch gekennzeichnet, dass** sich die Erhebungen und Vertiefungen schräg zu der gegenüberliegenden Rändern (14,16) der Gitterplattenelemente (12) und/oder zwischen diesen wellenförmig, zickzackförmig von einer geradlinigen Erstreckung abweichend verlaufen.

10. Einbauelement nach einem der Ansprüche 1 bis 9, **dadurch gekennzeichnet, dass** benachbarte Gitterplattenelemente (12) miteinander durch Steck- oder Rastverbindungen oder durch Zapfen-Loch- oder Nietverbindungen mit Kalt- oder Warmverformung des die Verbindung herstellenden Materials gekoppelt sind.

11. Einbauelement nach einem der Ansprüche 1 bis 10, **dadurch gekennzeichnet, dass** die Gitterplattenelemente (12) und das mindestens eine Folienplattenelement (19) Kunststoff, Papier oder Pappe aufweisen.

## Claims

1. An insert element for inserting into a device for humidifying, cleaning and/or cooling a fluid, in particular a gas, such as e.g. air, said insert element comprising
- an insert body (10) adapted to be wetted with a liquid, in particular water, the outer side of the insert body (10) comprising a flow inlet side and a flow outlet side and, between these sides, being provided with regions adapted to be wetted with the liquid and to be exposed to a gas, in particular air, wherein the insert body (10) and its regions between the flow inlet side and the flow outlet side are configured to allow the gas to flow therethrough,
- wherein the insert body (10) has a multi-layered design and has a plurality of mutually abutting undulated grid-type plate elements (12) which are each delimited by an edge (14,16) and are provided with elevations and depressions,
- wherein, between at least two adjacent grid plate elements (12), at least one film-type plate element (19) is arranged,
- wherein the insert body (10) comprises, per layer, a plurality of grid-type plate elements (12) abutting each other by their mutually confronting edges, and
- wherein at least one film-type plate element (19) is arranged between the grid-type plate elements (12) of at least one pair of adjacent layers of grid-type plate elements (12) and covers these grid-type plate elements (12),
**characterized in that**
the at least one film-type plate element (19) is plane.

2. The insert element according to claim 1, **characterized in that** between a plurality of pairs of mutually adjacent grid-type plate elements (12), a respective film-type plate element (19,19') is arranged.

3. The insert element according to claim 1 or 2, **characterized in that** that the mutually confronting edges (14,16) of respectively two adjacent grid-type plate elements (12) of a layer (13) are covered by a grid-type plate element (12) of the adjacent layer (13) of the insert body (10).

4. The insert element according to any one of claims 1 to 3, **characterized in that** the grid-type plate elements (12) each comprise longitudinal and transverse edges (14,16) and that adjacent grid-type plate elements (12) of a layer (13) are arranged to face each other respectively by their longitudinal edges (14) and/or by their transverse edges (16).

5. The insert element according to any one of claims 1 to 4, **characterized in** the insert body (10) comprises tie bars (17) running in the direction of the succession of the layers (13) of grid-type plate elements (12) and extending through mutually abutting grid-type plate elements (12) and the at least one film-type plate elements (19).

6. The insert element according to any one of claims 1 to 5, **characterized in that** the outer side of the insert body (10) comprises continuous lateral faces formed by the edges (14,16) of the grid-type plate elements (12), and top and bottom sides formed by the grid-type plate elements (12) of the outer layers (13).

7. The insert element according to claim 6, **characterized in that** that the flow inlet and outlet sides are formed by two mutually opposite outer side faces of the insert body (10) and thus define the direction of the gas flow passing through the insert body (10), and that the insert body (10) can be sprayed with liquid from its top side (11), the liquid passing through the insert body (10) transversely to the gas flow while wetting the grid-type plate elements (12).

8. The insert element according to claim 7, **characterized in that** the flow inlet side is formed by the bottom side (15) of the insert body (10) and the flow outlet side is formed by the top side (11) of the insert body (10) and that the insert body (10) can be sprayed with liquid from its top side (11), the liquid passing through the insert body (10) oppositely to the gas flow while wetting the grid-type plate elements (12).

9. The insert element according to any one of claims 1 to 8, **characterized in that** the elevations and depressions extend at an inclination relative to the mutually opposite edges (14,16) of the grid-type plate elements (12) and/or between the latter in an undulated, zig-zag shape deviating from a linear extension.

10. The insert element according to any one of claims 1 to 9, **characterized in that** adjacent grid-type plate elements (12) are connected to each other by plug or locking connections or by pin/hole or rivet connections with cold or hot deformation of the material generating the connection.

11. The insert element according to any one of claims 1 to 10, **characterized in that** the grid-type plate elements (12) and the at least one film-type plate element (19) are made of plastic, paper or cardboard.

## Revendications

1. Module à insérer dans un dispositif d'humidification, de purification et/ou de refroidissement d'un fluide, en particulier d'un gaz comme p. ex. l'air, doté
- d'un corps intégré (10) pouvant être mouillé avec un fluide, en particulier avec de l'eau, dont la face externe comporte un côté entrée du flux ainsi qu'un côté sortie du flux et est prévue entre ces deux côtés avec des zones pouvant être mouillées par le fluide et exposées à un gaz, en particulier de l'air, le corps intégré (10) et ses zones pouvant être parcourues par celui-ci entre le côté entrée du flux et le côté sortie du flux,
- dans lequel le corps intégré (10) est conçu avec plusieurs couches et comporte une pluralité d'éléments de plaque en treillis (12) ondulés adjacents l'un à l'autre et délimités respectivement par un bord (14, 16), qui sont prévus dotés d'élévations et de dépressions,
- dans lequel au moins un élément de plaque en feuille perforée (19) est disposé entre au moins deux éléments de plaque en treillis (12) adjacents,
- dans lequel le corps intégré (10) comporte plusieurs éléments de plaque en treillis (12) placés l'un à côté de l'autre par couche, dont les bords sont opposés l'un à l'autre, et
- dans lequel au moins un élément de plaque en feuille (19) est disposé entre les éléments de plaque en treillis (12) d'au moins une paire de couches adjacentes d'éléments de plaque de treillis (12) et recouvre ces éléments de plaque en treillis (12), **caractérisé en ce que**
- l'au moins un élément de plaque en feuille (19) est plat.

2. Module selon la revendication 1, **caractérisé en ce qu'**un élément de plaque en feuille (19) est respectivement disposé entre plusieurs paires adjacentes d'éléments de plaque en treillis (12).

3. Module selon la revendication 1 ou 2, **caractérisé en ce que** les bords (14, 16) respectifs opposés l'un à l'autre de deux éléments de plaque en treillis (12) placés l'un à côté de l'autre de l'au moins une couche (13) sont recouverts par un élément de plaque en treillis (12) de la couche (13) adjacente du corps intégré (10).

4. Module selon l'une des revendications 1 à 3, **caractérisé en ce que** les éléments de plaque en treillis (12) comportent respectivement des bords longitudinaux et transversaux (14, 16) et **en ce que** les éléments de plaque en treillis (12) d'une couche (13) adjacente sont agencés respectivement opposés l'un à l'autre avec leurs bords longitudinaux (14) et/ou avec leurs bords transversaux (16).

5. Module selon l'une des revendications 1 à 4, **caractérisé en ce que** le corps intégré (10) comporte des tringles de fixation (17) situées dans la direction de la succession des couches (13) d'éléments de plaque en treillis (12), lesquelles s'étendent au travers d'éléments de plaques en treillis (12) contigus et de l'au moins un élément de plaque en feuille (19).

6. Module selon l'une des revendications 1 à 5, caractérisé en ce la surface externe du corps intégré (10) comporte des surfaces latérales continues formées par les bords (14, 16) des éléments de plaque en treillis (12) ainsi que des surfaces supérieures et inférieures formées par les éléments de plaque en treillis (12) des couches externes (13).

7. Module selon la revendication 6, **caractérisé en ce que** les côtés entrée du flux et sortie du flux sont formés par deux surfaces latérales opposées l'une à l'autre du corps intégré (10) définissant ainsi le sens du flux de gaz traversant le corps intégré (10) et **en ce que** le corps intégré (10) peut par sa face supérieure (11) être arrosé de fluide, qui traverse le corps intégré (10) transversalement au flux de gaz et en utilisant les éléments de plaque en treillis (12).

8. Module selon la revendication 7, **caractérisé en ce que** le côté entrée du flux est formé par la face inférieure (15) du corps intégré (10) et le côté sortie du flux est formé par la face supérieure (11) du corps intégré (10) et **en ce que** le corps intégré (10) peut par sa face supérieure (11) être arrosé de fluide, qui traverse le corps intégré (10) à contre-courant du flux de gaz et en utilisant les éléments de plaque en treillis (12).

9. Module selon l'une des revendications 1 à 8, **caractérisé en ce que** les élévations et les dépressions s'étendent de manière oblique par rapport aux bords (14, 16) opposés des éléments de plaque en treillis (12) et/ou s'étendent entre ceux-ci en déviant d'une ligne droite de manière ondulée ou en zigzag.

10. Module selon l'une des revendications 1 à 9, **caractérisé en ce que** des éléments de plaque en treillis (12) adjacents sont couplés l'une à l'autre par des raccords enfichables ou encliquetables ou par des raccords tenon-mortaise ou des jointures rivetées par formage à froid ou à chaud du matériau formant la liaison.

11. Module selon l'une des revendications 1 à 10, **caractérisé en ce que** les éléments de plaque en treillis (12) et l'au moins un élément de plaque en feuille (19) comportent du plastique, du papier ou du carton.
